# EUROPEAN PATENT APPLICATION

(11) **EP 3 736 060 A1**
(43) Date of publication of application: **11.11.2020**
(21) Application number: 20169818.0
(22) Date of filing: 16.04.2020
(51) Int. Cl.: B21D 22/02, B21D 22/20, B21D 35/00, B21D 37/16, B21D 53/88

(54) **METAL PLATE MEMBER MANUFACTURING METHOD AND VEHICLE BODY MANUFACTURING METHOD**

(30) Priority: 08.05.2019 JP 2019088556
(71) Applicant: TOYOTA JIDOSHA KABUSHIKI KAISHA, TOYOTA-SHI, AICHI-KEN 471-8571 (JP)
(72) Inventor: MORINO, Masaki, Aichi-ken, 471-8571 (JP); OKAMURA, Koji, Aichi-ken, 471-8571 (JP)
(74) Representative: J A Kemp LLP

(57) **Abstract**

A method for manufacturing a metal plate member includes stacking first and second metal plates (10, 20) with a resin adhesive (30) interposed between the first and second metal plates, subjecting the stacked first and second metal plates (10, 20) to press forming, and curing the resin adhesive (30) after the press forming.

## Description

### BACKGROUND OF THE INVENTION

### 1. Field of the Invention

The invention relates to a method for manufacturing a metal plate member and a method for manufacturing a vehicle body. In particular, the invention relates to a method for manufacturing a metal plate member in which a plurality of metal plate members are joined to each other with an adhesive, and a method for manufacturing a vehicle body using the metal plate member.

### 2. Description of Related Art

For example, in a metal plate member such as a center pillar (also referred to as "B-pillar") constituting a vehicle body, a metal plate member for reinforcement is joined to a part of a main metal plate member in order to achieve both reduction in weight and increase in strength. For example, in the center pillar, a center pillar reinforcement that is the metal plate member for reinforcement is joined to an inner side of a center pillar outer panel that is the main metal plate member.

As a way to join metal plate members such as steel plates and aluminum plates, welding such as resistance spot welding and bonding with an adhesive are known. For example, Japanese Unexamined Patent Application Publication No. 5-50258 (JP 5-50258 A) describes a technique in which when manufacturing a vehicle body, a formed steel plate member and a formed aluminum plate member are joined to each other with an adhesive, and then these metal plate members are welded by resistance spot welding.

### SUMMARY OF THE INVENTION

The inventors have found the following issues with respect to a method for manufacturing a metal plate member in which a plurality of metal plate members are joined to each other with an adhesive. When joining together already-formed metal plate members with an adhesive, a gap (that is, a clearance) between mating surfaces that are joined to each other with the adhesive is likely to vary due to dimensional tolerances of the metal plate members or the like. When the gap between the mating surfaces is large, a desired joint strength cannot be obtained. Thus, due to the variation in the gap between the mating surfaces, there have been cases where the desired joint strength cannot be stably obtained.

The invention provides a method for manufacturing a metal plate member, which suppresses variation in a gap between mating surfaces that are joined to each other with an adhesive, so that a desired joint strength can be stably obtained.

A first aspect of the invention relates to a method for manufacturing a metal plate member. The method includes: stacking first and second metal plates with a resin adhesive interposed between the first and second metal plates; subjecting the stacked first and second metal plates to press forming; and curing the resin adhesive after the press forming.

In the method according to the first aspect, the metal plates are stacked with an uncured resin adhesive interposed therebetween and subjected to press forming. Therefore, the gap between the mating surfaces of the metal plates is stably reduced by pressurization at the time of press forming, so that the resin adhesive can be uniformly spread over the entire mating surfaces. As a result, compared to the case where the already-formed metal plate members are joined to each other with a resin adhesive, variation in the gap between the mating surfaces is suppressed, and a desired joint strength can be stably obtained.

In the method according to the first aspect, the resin adhesive may be any one of an epoxy resin-based adhesive, a urethane resin-based adhesive, and an acrylic resin-based adhesive.

A second aspect of the invention relates to a method for manufacturing a vehicle body. The method includes: employing, for a cabin of the vehicle body, a first metal plate member in which a first metal plate and a second metal plate are joined to each other, the first metal plate member being obtained by stacking the first metal plate and the second metal plate with a first resin adhesive interposed between the first metal plate and the second metal plate and subjecting the first metal plate and the second metal plate to press forming; and employing, for a crushable zone of the vehicle body, a second metal plate member in which a third metal plate and a fourth metal plate are joined to each other, the second metal plate member being obtained by stacking the third metal plate and the fourth metal plate with a second resin adhesive interposed between the third metal plate and the fourth metal plate and subjecting the third metal plate and the fourth metal plate to press forming, the second resin adhesive having lower shear strength after curing than the first resin adhesive.

In the method according to the second aspect, the first metal plate member obtained by joining together the first and second metal plates with the first resin adhesive is used for the cabin, whereas the second metal plate member obtained by joining together the third and fourth metal plates with the second resin adhesive having lower shear strength after curing than the first resin adhesive is used for the crushable zone. Using the resin adhesives having different shear strengths after curing depending on the part for which the metal plate member is used, it is possible to manufacture the vehicle body in a simple manner.

In the method according to the second aspect, the first resin adhesive may be an epoxy resin-based adhesive, and the second resin adhesive may be a urethane resin-based adhesive or an acrylic resin-based adhesive.

The invention provides a method for manufacturing a metal plate member, which suppresses variation in a gap between mating surfaces that are joined to each other with an adhesive, so that a desired joint strength can be stably obtained.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a flowchart showing a method for manufacturing a metal plate member according to a first embodiment;
FIG. 2 is a perspective view showing an example of a stacking process (step ST1);
FIG. 3 is a perspective view showing an example of a press forming process (step ST2);
FIG. 4 is a schematic sectional view of a metal plate member 40 formed by pressing;
FIG. 5 is sectional view of a specific example of the metal plate member 40 formed by pressing;
FIG. 6 is a graph showing a relationship between elongation (%) after curing and shear strength of a resin adhesive;
FIG. 7 is a perspective view of a vehicle body;
FIG. 8 is sectional view showing test pieces formed of metal plate members manufactured by manufacturing methods according to Examples and Comparative Example;
FIG. 9 is a schematic side view of a three-point bending test apparatus; and
FIG. 10 is a graph showing results of the three-point bending test regarding the test pieces according to Examples 1, 2 and Comparative Example.

### DETAILED DESCRIPTION OF EMBODIMENTS

Hereinafter, a specific embodiment to which the invention is applied will be described in detail with reference to the drawings. However, the invention is not limited to the following embodiment. In addition, in order to clarify the description, the following description and the drawings are simplified as appropriate.

### Method for Manufacturing Metal Plate Member

### First Embodiment

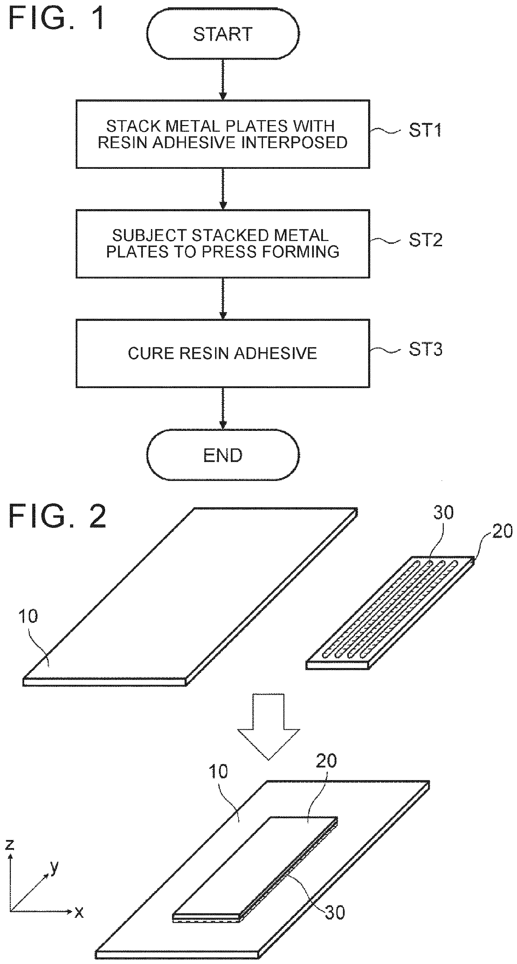

First, a method for manufacturing a metal plate member according to a first embodiment will be described with reference to FIG. 1. The method for manufacturing a metal plate member according to the first embodiment is suitable as a method for manufacturing a metal plate member for a vehicle body. In the manufactured metal plate member, a plurality of metal plate members are joined to each other with a resin adhesive. With such a configuration, for example, both reduction in weight and increase in strength can be achieved.

FIG. 1 is a flowchart showing the method for manufacturing a metal plate member according to the first embodiment. As shown in FIG. 1, first, metal plates are stacked with a resin adhesive interposed therebetween (step ST1). FIG. 2 is a perspective view showing an example of a stacking process (step ST1). As shown in FIG. 2, in step ST1, a flat metal plate (first metal plate) 10 and a flat metal plate (second metal plate) 20 both extending in a y-axis direction are stacked with a resin adhesive 30 interposed therebetween.

Needless to say, a right-handed xyz coordinate system shown in FIG. 2 and other drawings is provided for convenience in describing a positional relationship of constitutional elements. Normally, a positive direction along a z-axis represents vertically upward, and an xy plane represents a horizontal plane.

As shown in FIG. 2, for example, the resin adhesive 30 is applied, before stacking, to a surface of the metal plate 20 that is smaller than the metal plate 10. The metal plates 10 and 20 are not limited at all, and are, for example, steel plates or aluminum plates. The metal plates 10 and 20 may be formed of the same kind of metal or different kinds of metal. For example, both the metal plates 10 and 20 may be steel plates or aluminum plates. Alternatively, one of the metal plates 10 and 20 may be a steel plate and the other may be an aluminum plate.

As the resin adhesive 30, a thermosetting resin adhesive can be used, for example. Specific examples of the resin adhesive 30 include an epoxy resin-based adhesive, a urethane resin-based adhesive, and an acrylic resin-based adhesive. The method for applying the resin adhesive 30 is not limited at all. For example, the resin adhesive 30 may be applied to a part of the surface of the metal plate 20 by nozzle application, drop application, etc. or may be applied to the entire surface of the metal plate 20 by spray application, roll application, etc.

In the example of FIG. 2, the resin adhesive 30 is applied to a part of the surface of the metal plate 20 by nozzle application. Specifically, the resin adhesive 30 is applied to the surface of the metal plate 20 at a plurality of locations (four locations in FIG. 2) so as to extend linearly in the y-axis direction. Instead of applying the resin adhesive 30 to the surface of the metal plate 20, the resin adhesive 30 may be applied to the surface of the metal plate 10 at a region to which the metal plate 20 is joined. Further, the resin adhesive 30 may be applied to the surface of each of the metal plate 10 and the metal plate 20.

Next, as shown in FIG. 1, the metal plates 10 and 20 stacked with the resin adhesive 30 interposed therebetween are subjected to press forming (step ST2). Thus, a metal plate member 40 is formed by a press forming process (step ST2). Although the resin adhesive 30 has not cured, the metal plates 10 and 20 are joined to each other to some extent with the resin adhesive 30, so that misalignment of the metal plates 10 and 20 does not occur during press forming.

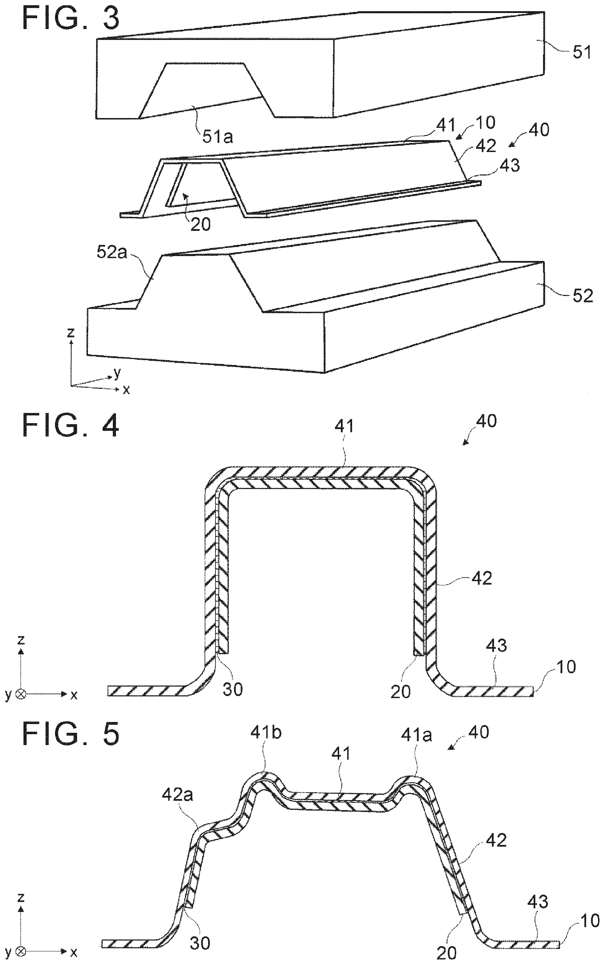

FIG. 3 is a perspective view showing an example of the press forming process (step ST2). FIG. 3 shows an upper die 51 and a lower die 52 separated from each other after the stacked metal plates 10 and 20 are subjected to press forming. In FIG. 3, the resin adhesive 30 is omitted. As shown in FIG. 3, the stacked metal plates 10 and 20 with the resin adhesive 30 interposed therebetween are placed on an upper surface of the lower die 52 with the metal plate 10 disposed on the top of the metal plate 20, and the metal plates 10 and 20 are sandwiched between the upper die 51 and the lower die 52 so as to be subjected to press forming.

In the example of FIG. 3, a recessed portion 51a having a trapezoidal cross section is provided in a lower surface of the upper die 51 so as to extend in an axial direction (y-axis direction). Similarly, a protruding portion 52a having a trapezoidal cross section is provided in the upper surface of the lower die 52 so as to extend in the axial direction (y-axis direction).

Thus, the metal plate member 40 formed by pressing includes a top plate 41, side walls 42, and flanges 43 all extending in the y-axis direction, and the metal plate member 40 has a hat-shaped cross section. More specifically, the pair of side walls 42 are formed to extend downward from ends, in a width direction (x-axis direction), of the top plate 41 extending in the y-axis direction. Further, the flanges 43 extend outward from respective lower ends (on the negative side in a z-axis direction) of the side walls 42.

FIG. 4 is a schematic sectional view of the metal plate member 40 formed by pressing. As shown in FIG. 4, the metal plate member 40 has a structure in which the metal plate 20 having a U-shaped cross section is fitted inside the metal plate 10 having a hat-shaped cross section. That is, the metal plate 10 is reinforced by the metal plate 20 at the top plate 41 and the side walls 42. The gap between the mating surfaces of the metal plates 10 and 20 is filled with the uncured resin adhesive 30. In FIG. 4, the gap between the mating surfaces of the metal plates 10 and 20 is shown to be large to emphasize the resin adhesive 30.

Finally, as shown in FIG. 1, the resin adhesive 30 is cured (step ST3). Thereby, the metal plates 10 and 20 are joined to each other with the resin adhesive 30. For example, a one-component thermosetting resin adhesive is used as the resin adhesive 30 and the resin adhesive 30 is cured by heating. Alternatively, a two-component thermosetting resin adhesive may be used as the resin adhesive 30 and the resin adhesive 30 may be cured without heating. In that case, the resin adhesive 30 of a type may be selected such that curing of the resin adhesive 30 is not completed during a period from application of the resin adhesive 30 to press forming. As the thermosetting resin adhesive, for example, an epoxy resin-based adhesive, a urethane resin-based adhesive, an acrylic resin-based adhesive, and the like can be used.

If the resin adhesive 30 is cured before the press forming process (step ST2), the cured resin adhesive 30 is broken in the press forming process (step ST2), so that a desired joint strength cannot be obtained.

### Specific Example of Metal Plate Member

FIG. 5 is sectional view of a specific example of the metal plate member 40 formed by pressing. The metal plate member 40 shown in FIG. 5 is a center pillar for a vehicle body. The metal plate member 40 includes a center pillar outer panel formed of the metal plate 10 and a center pillar reinforcement formed of the metal plate 20.

In contrast to the metal plate member 40 schematically shown in FIG. 4, the center pillar (metal plate member 40) shown in FIG. 5 is provided with protrusions 41a and 41b protruding upward (toward the positive side in the z-axis direction) at the two ends of the top plate 41 in the width direction. Further, one of the side walls 42 is provided with a step 42a.

In FIG. 5 as well, the gap between the mating surfaces of the metal plates 10 and 20 is shown to be large to emphasize the resin adhesive 30. Further, the metal plate member 40 is not limited to the center pillar. Further, the cross-sectional shape of the center pillar shown in FIG. 5 is merely an example, and is not limited at all.

### Description of Effects

With reference to FIGS. 4 and 5, a description will be given of a case where the already-formed metal plate members are joined to each other with a resin adhesive, rather than description of the embodiment. When the already-formed metal plates 10 and 20 are fitted to each other and joined with the resin adhesive, for example, the gap between the mating surfaces is likely to vary due to dimensional tolerances of the protrusions 41a and 41b and the step 42a shown in FIG. 5. Further, the resin adhesive 30 at the side walls 42 shown in FIGS. 4 and 5 is scraped off when the formed metal plates 10 and 20 are fitted to each other. Thus, the metal plates 10 and 20 are joined only with the resin adhesive 30 at the top plate 41.

On the other hand, in the method for manufacturing a metal plate member according to the embodiment, the metal plates 10 and 20 stacked with the uncured resin adhesive 30 interposed therebetween are subjected to press forming. Therefore, the gap between the mating surfaces of the metal plates 10 and 20 is stably reduced by pressurization at the time of press forming, so that the resin adhesive 30 can be uniformly spread over the entire mating surfaces. As a result, compared to the case where the already-formed metal plate members are joined to each other with a resin adhesive, variation in the gap between the mating surfaces is suppressed, and a desired joint strength can be stably obtained.

As shown in FIGS. 4 and 5, not only the top plate 41 but also the side walls 42 can be supplied with the resin adhesive 30 at the mating surfaces of the metal plates 10 and 20. Therefore, compared with the case where the already-formed metal plate members are joined to each other with the resin adhesive, a joint area where the mating surfaces are joined to each other with the resin adhesive 30 is large and the joint strength is improved. Furthermore, the entire gap between the mating surfaces of the metal plates 10 and 20 is filled with the resin adhesive 30. Therefore, rust prevention performance is improved, and generation of abnormal noise due to contact between the metal plates 10 and 20 can be suppressed.

In addition, when the already-formed metal plate members are joined to each other with the resin adhesive, the metal plate members are individually subjected to press forming. Therefore, a plurality of sets of dies are required. On the other hand, in the method for manufacturing a metal plate member according to the embodiment, the metal plates 10 and 20 are stacked and subjected to press forming together, rather than individually subj ected to press forming. Therefore, time for the press forming process can be shortened, and the number of sets of dies can be reduced.

### Method for Manufacturing Vehicle Body

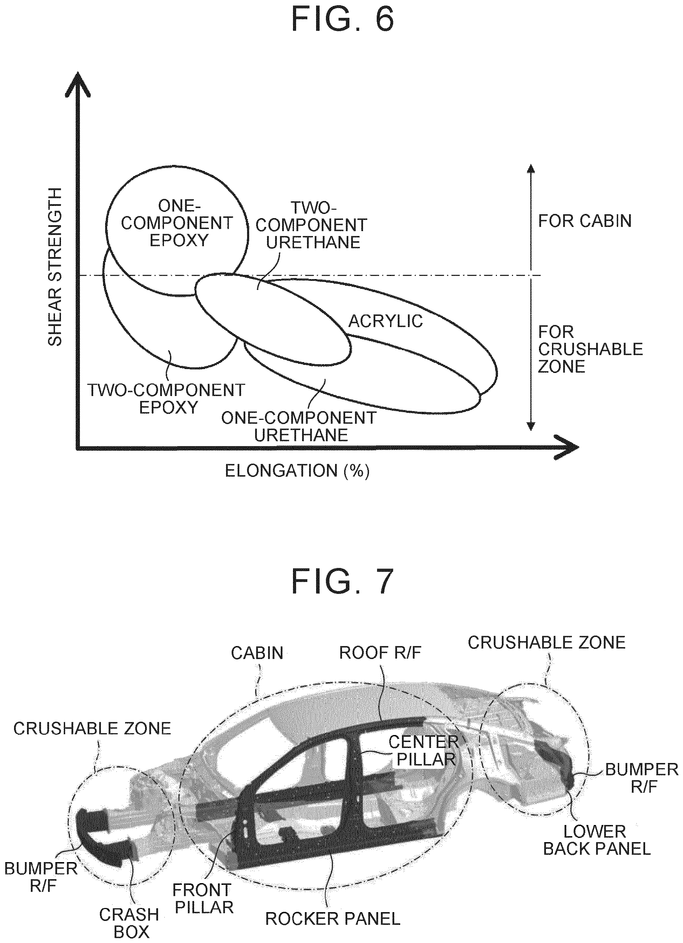

Next, a method for manufacturing a vehicle body according to the first embodiment will be described with reference to FIGS. 6 and 7. FIG. 6 is a graph showing a relationship between elongation (%) and shear strength after curing of the thermosetting resin adhesives. FIG. 7 is a perspective view of the vehicle body.

The method for manufacturing a vehicle body according to the first embodiment is a method for manufacturing a vehicle body using the metal plate member 40 manufactured by the method for manufacturing a metal plate member according to the first embodiment. That is, the method according to the first embodiment is a method for manufacturing a vehicle body using the metal plate member 40 obtained by subjecting the metal plates 10 and 20 stacked with the resin adhesive 30 interposed therebetween to press forming and then curing the resin adhesive 30, as shown in FIGS. 2 to 4 and the like, for example.

In the method for manufacturing a vehicle body according to the first embodiment, the resin adhesives 30 having different shear strengths after curing are used depending on a part of the vehicle body, for which the metal plate member 40 is used. Specifically, as shown in FIG. 6, for a cabin of the vehicle body, the metal plate member (first metal plate member) 40 is used that is obtained by joining together the metal plates with the resin adhesive (first adhesive) 30 having a shear strength after curing higher than that of an adhesive used for a crushable zone. That is, the resin adhesive 30 having high shear strength is used for the metal plate member 40 for the cabin so as to suppress deformation as much as possible to protect occupants. For example, as the resin adhesive 30, a one-component or two-component epoxy resin-based adhesive shown in FIG. 6 is used. Note that a boundary indicated by a long dashed short dashed line in FIG. 6 is provided for convenience and does not represent a clear boundary.

As shown in FIG. 7, examples of the metal plate member 40 for the cabin include, in addition to the center pillar shown in FIG. 5, a front pillar (also referred to as "A-pillar"), a rocker panel, and a roof reinforcement (R/F). The front pillar, the center pillar, the rocker panel, and the roof R/F that constitute the cabin are provided on both sides of the vehicle in a vehicle width direction.

The rocker panel is provided in a lower part of the vehicle so as to extend in a vehicle front-rear direction. The roof R/F is provided in an upper part of the vehicle so as to extend in the vehicle front-rear direction. The front pillar extends in a vehicle up-down direction so as to connect respective front ends of the rocker panel and the roof R/F The center pillar extends in the vehicle up-down direction so as to connect substantially central parts of the rocker panel and the roof R/F

On the other hand, as shown in FIG. 6, for the crushable zone of the vehicle body, the metal plate member (second metal plate member) 40 is used that is obtained by joining together the metal plates with the resin adhesive (second adhesive) 30 having a shear strength after curing lower than that of the adhesive used for the cabin. That is, for the metal plate member 40 for the crushable zone, the resin adhesive 30 having low shear strength is used so that the metal plate member 40 for the crushable zone is deformed prior to the metal plate member 40 for the cabin to absorb an impact. For example, as the resin adhesive 30, a one-component or two-component urethane resin adhesive or a one-component or two-component acrylic resin adhesive shown in FIG. 6 is used. If the elongation of the resin adhesive 30 is small, the resin adhesive 30 is broken at an early stage of deformation of the metal plate member 40, so that the impact cannot be sufficiently absorbed. Thus, it is preferable that the elongation of the resin adhesive 30 be large. As shown in FIG. 6, resin adhesives having low shear strength tend to have large elongation.

As shown in FIG. 7, the crushable zone is located in front of and behind the cabin. Examples of the metal plate member 40 for the crushable zone include front and rear bumper reinforcements (R/F), a crash box, and a lower back panel. The front bumper R/F is provided at the front end of the vehicle. The crash box is provided at both ends of the front bumper R/F in the vehicle width direction so as extend rearward. The rear bumper R/ F is attached to the lower back panel at the rear end of the vehicle.

As described above, in the method for manufacturing the vehicle body according to the first embodiment, the metal plate member 40 obtained by joining together the metal plates with the resin adhesive 30 having relatively high shear strength after curing is used for the cabin, whereas the metal plate member 40 obtained by joining together the metal plates with the resin adhesive 30 having relatively low shear strength after curing is used for the crushable zone. Using the resin adhesives 30 having different shear strengths after curing depending on the part for which the metal plate member 40 is used, it is possible to manufacture the vehicle body in a simple manner.

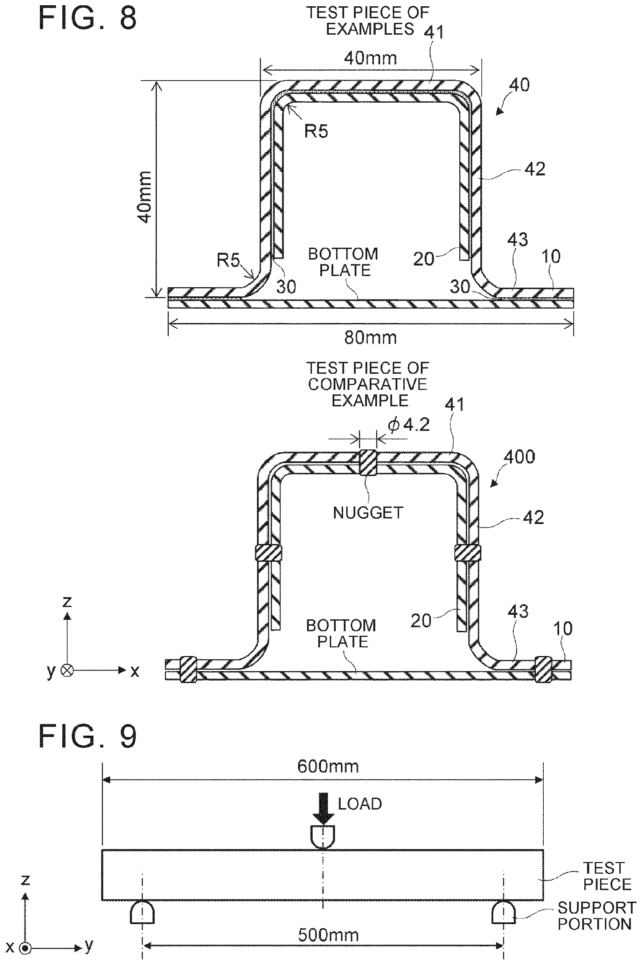

Hereinafter, Examples and Comparative Example of the method for manufacturing a metal plate member according to the first embodiment will be described. FIG. 8 is sectional view showing test pieces formed of metal plate members manufactured by manufacturing methods according to Examples and Comparative Example. Hereinafter, each method for manufacturing a test piece according to Examples and Comparative Example will be described.

### Example 1

First, as described above, the metal plates 10 and 20 stacked with the resin adhesive 30 interposed therebetween were subjected to press forming to obtain the metal plate member 40 shown in FIG. 4. Then, as shown in an upper part of FIG. 8, the resin adhesive 30 was applied to lower surfaces of the flanges 43 of the metal plate member 40, and a bottom plate was attached thereto. As the resin adhesive 30, a one-component epoxy resin-based adhesive (adhesive for structures, which is manufactured by Aisin Chemical Co., Ltd.) was used. Thereafter, the metal plate member 40 with the bottom plate was heated at 170°C for 20 minutes to cure the resin adhesive 30, thereby obtaining the test piece according to Example 1.

A hot-dip zinc-coated steel sheet (SCGA 270-45) having a thickness of 0.7 mm and a length of 600 mm was used for each of the metal plates 10 and 20 and the bottom plate. As shown in the upper part of FIG. 8, the width of the bottom plate and the metal plate 10 after press forming were set to 80 mm. Both the width of the top plate 41 and the height of the side walls 42 were set to 40 mm. Each connecting portion between the top plate 41 and the side walls 42 and each connecting portion between the side walls 42 and the flanges 43 were set to have a curvature of R5.

### Example 2

As the resin adhesive 30, a two-component urethane resin-based adhesive (LORD 7545 manufactured by LORD Corporation) was used, and the resin adhesive 30 was cured without heating. With other conditions set to the same as those in Example 1, the test piece was manufactured.

### Comparative Example

First, the flat metal plates 10 and 20 were stacked with no resin adhesive interposed therebetween, and were subjected to resistance spot welding. The joined metal plates 10 and 20 were subjected to press forming to obtain a metal plate member 400 shown in a lower part of FIG. 8. Thereafter, a bottom plate was placed on the lower surfaces of the flanges 43 of the metal plate member 400, and the metal plate member 400 and the bottom plate were subjected to resistance spot welding.

As shown in the lower part of FIG. 8, in a xz cross section, the metal plates 10 and 20 are joined at three points, i.e., a central part of the top plate 41 in the width direction (x-axis direction), respective central parts of the side walls 42 in a height direction (z-axis direction). The metal plate 10 and the bottom plate are joined at two points, i.e., at the flanges 43 on both sides. Welding gaps in a longitudinal direction (y-axis direction) were all set to 80 mm. A diameter of each welding nugget was set to 4.2 mm. The materials and dimensions of the metal plates 10 and 20 and the bottom plate were the same as in Example 1.

### Test Method

For each of the test pieces according to Examples 1, 2 and Comparative Example, a three-point bending test was performed and a maximum load was measured. FIG. 9 is a schematic side view of a three-point bending test apparatus. As shown in FIG. 8, the test piece having a total length of 600 mm was supported from below by two support portions, and a load was applied from above to a central part of the test piece in the longitudinal direction (y-axis direction). The distance between the supporting portions was set to 500 mm. A radius of each support portion and a radius of a tip of an indenter were both set to 25 mm.

### Test Results

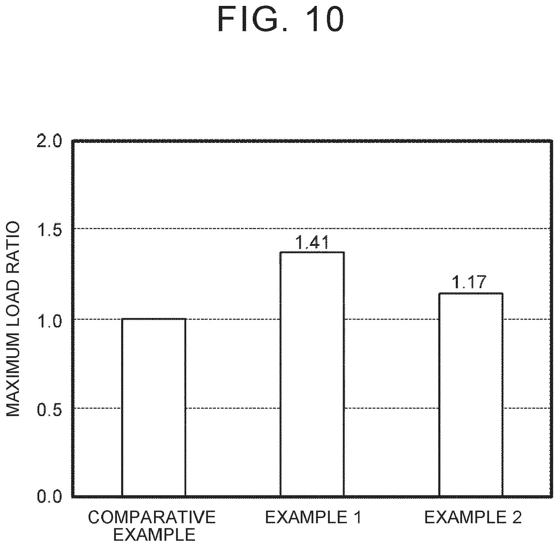

FIG. 10 is a graph showing results of the three-point bending test regarding the test pieces according to Examples 1, 2 and Comparative Example. The vertical axis in FIG. 10 indicates the maximum load in the case where the maximum load on the test piece according to Comparative Example is 1, that is, a maximum load ratio. Example 1 in which the metal plates were joined with the one-component epoxy resin-based adhesive provided the maximum load that is 41% higher than that of Comparative Example in which the metal plates were joined by resistance spot welding. Also, Example 2 in which the metal plates were joined with the two-component urethane resin-based adhesive provided the maximum load that is 17% higher than that of Comparative Example. Thus, a metal plate member having sufficient strength was manufactured by the method for manufacturing a metal plate member according to the first embodiment.

In addition, Example 1 in which the metal plates were joined to each other with the one-component epoxy resin-based adhesive provided the maximum load that is 20% higher than that of Example 2 in which the metal plates were joined to each other with the two-component urethane resin-based adhesive. Thus, for example, the metal plate member obtained by joining together the metal plates with the one-component epoxy resin-based adhesive (corresponding to Example 1) can be used for the cabin, and the metal plate member obtained by joining together the metal plates with the two-component urethane resin-based adhesive (corresponding to Example 2) can be used for the crushable zone.

Note that the invention is not limited to the above-described embodiment, and can be appropriately modified without departing from the scope of the invention.

## Claims

1. A method for manufacturing a metal plate member, the method comprising:
stacking first and second metal plates (10, 20) with a resin adhesive (30) interposed between the first and second metal plates (10, 20);
subjecting the stacked first and second metal plates (10, 20) to press forming; and
curing the resin adhesive (30) after the press forming.

2. The method according to claim 1, wherein the resin adhesive (30) is any one of an epoxy resin-based adhesive, a urethane resin-based adhesive, and an acrylic resin-based adhesive.

3. A method for manufacturing a vehicle body, the method comprising:
employing, for a cabin of the vehicle body, a first metal plate member in which a first metal plate and a second metal plate are joined to each other, the first metal plate member being obtained by stacking the first metal plate and the second metal plate with a first resin adhesive interposed between the first metal plate and the second metal plate and subjecting the first metal plate and the second metal plate to press forming; and
employing, for a crushable zone of the vehicle body, a second metal plate member in which a third metal plate and a fourth metal plate are joined to each other, the second metal plate member being obtained by stacking the third metal plate and the fourth metal plate with a second resin adhesive interposed between the third metal plate and the fourth metal plate and subjecting the third metal plate and the fourth metal plate to press forming, the second resin adhesive having lower shear strength after curing than the first resin adhesive.

4. The method according to claim 3, wherein:
the first resin adhesive is an epoxy resin-based adhesive; and
the second resin adhesive is a urethane resin-based adhesive or an acrylic resin-based adhesive.
